# EUROPEAN PATENT SPECIFICATION

(11) **EP 2 695 735 B1**
(45) Date of publication and mention of the grant of the patent: **27.12.2017**
(21) Application number: 12768281.3
(22) Date of filing: 27.03.2012
(51) Int. Cl.: B32B 25/16, B32B 27/30, B65D 73/02, B65D 85/86, B32B 27/08, B32B 27/18, B32B 27/20, B32B 27/32, B32B 27/34, B32B 27/36, B65D 65/40, B65D 43/02

(54) **COVER FILM**
ABDECKFOLIE
FILM DE COUVERTURE

(30) Priority: 01.04.2011 JP 2011081574
(43) Date of publication of application: 12.02.2014
(73) Proprietor: Denka Company Limited, Tokyo 103-8338 (JP)
(72) Inventor: FUJIMURA Tetsuo, Isesaki-shi Gunma 372-0855 (JP); TOKUNAGA Hisatsugu, Isesaki-shi Gunma 372-0855 (JP); TANAZAWA Yusuke, Isesaki-shi Gunma 372-0855 (JP); ONO Takeshi, Isesaki-shi Gunma 372-0855 (JP); WATANABE Tomoharu, Isesaki-shi Gunma 372-0855 (JP); SASAKI Akira, Isesaki-shi Gunma 372-0855 (JP); IWASAKI Takayuki, Isesaki-shi Gunma 372-0855 (JP); SUGIMOTO Kazuya, Isesaki-shi Gunma 372-0855 (JP)
(74) Representative: Blodig, Wolfgang
(86) International application number: PCT/JP2012/057942
(87) International publication number: WO 2012/137630

(56) References cited:
- WO-A1-2010/018791
- WO-A1-2010/055804
- JP-A- 11 198 299
- JP-A- 11 198 299
- JP-A- 2004 042 958
- JP-A- 2004 051 106
- JP-A- 2007 308 143
- US-A1- 2010 266 826

## Description

### TECHNICAL FIELD

The present invention relates to a cover film used in packages for electronic components.

### BACKGROUND ART

With the miniaturization of electronic devices, the electronic components used therein have also become progressively smaller and of higher performance, in addition to which the components are automatically mounted on printed circuit boards during assembly of the electronic devices. Surface-mounted electronic components are housed in carrier tape with pockets that are successively formed by thermoforming in accordance with the shapes of the electronic components. After loading the electronic components, a cover film is laid as a lid material over the top surface of the carrier tape, and the ends of the cover film are continuously heat-sealed in the longitudinal direction with a heated seal bar to form packages. As cover film materials, those having a heat seal layer of thermoplastic resin laminated onto a biaxially stretched polyester film are used. Carrier tapes are usually made of thermoplastic resins, such as polystyrenes, polycarbonates or polyesters.

In recent years, electronic components such as capacitors, resistors, transistors and LEDs have become increasingly smaller, lighter and thinner, while production speeds have become faster, making the requirements when heat-sealing a cover film to a carrier tape stricter than in the past with regard to the performance on the following two points. First, it must be capable of thermally bonding to carrier tape materials such as polystyrenes, polycarbonates and polyesters with sufficient peel strength even in a very short sealing time. Second, variations in peel strength when peeling the cover film should be small, in order to prevent components from flying out of the carrier tape due to the disparities in peel strength.

As a means to provide high-speed sealability to the cover film, the use of a substrate layer of a suitable thickness for the purpose of increasing the thermal conductivity of the cover film at the time of heat sealing has been described (Patent Document 1). Additionally, the idea of lowering the necessary heat for heat-sealing by making the peel layer a suitable thickness has been described (Patent Document 2). However, the high-speed sealing described in these publications has a heat sealing time of 0.4 to 0.5 seconds, and adjustment of the thickness of the substrate layer or peel layer is not an adequate solution for the ultra high-speed heat sealing that is required for heat-sealing capacitors and resistors of recent years. On the other hand, the idea of raising the peel strength with respect to carrier tape even while reducing the heat sealing time by including a fibrous substance on the surface of the carrier tape bonding to the cover film has also been described (Patent Document 3).

However, the cover film of Patent Document 3 is used for carrier tapes composed of paper materials, and has insufficient ultra high-speed sealability with respect to carrier tapes of polystyrene, polycarbonate or polyester.

### RELATED ART

### Patent Documents

- Patent Document 1:: JP 2006-182418 A
- Patent Document 2:: JP H11-278582 A
- Patent Document 3:: JP 2009-46132 A

**D1** (US 2010/266826 A1 (YONEZAWA TAKAKI [JP]) 21 October 2010) discloses a COVER TAPE FOR ELECTRONIC COMPONENT PACKING BODY with

BOPET base layer /15-35 um thick cushion layer: m-LLDPE cushion-layer 'resin A' VICAT ISO 306 Ta = 96-115°C / 2-15 um 'heat-seal following layer': 'resin B' VICAT = 75-93°C, e.g. resin A = SEBS etc. (or hSEBS, EVA ... or blend) + ethylene alpha-olefin copolymer (random?) / heat-seal layer, acrylic preferred

**D2** (JP 11 198299 A (DAINIPPON PRINTING CO., LTD.) 27 July 1999) discloses materials for constructing lids (USE on moulded containers f semiconductors), consisting of one or more
[A] base material sheet (1),
[B] intermediate layer (4) having 'adhesive' function,
[C] interlayer blend (2) = 70-30% S-B-copolymer + 30-70 % E/O-copolymer (d = 0.915-0.940),
[D] heat sealant layer (3), (thermoplastic resins, mainly acrylic resins with glass transition points (Tg) = -10 - 100 °C, comprising a conductive fine powder (SnO, tin oxide).

### SUMMARY OF THE INVENTION

The present invention is directed to a cover film to be used in combination with a carrier tape of polystyrene, polycarbonate, polyester or the like, with the purpose of enabling thermal bonding to such carrier tapes so as to have a sufficient peel strength even with a very short heat sealing time, with little variation in peel strength when peeling the cover film so as to prevent components from flying out from the carrier tape when peeling the cover film from the carrier tape.

As a result of diligent research into the aforementioned problems, the present inventors found that a cover film that overcomes the problems addressed by the present invention can be obtained by a cover film comprising at least a substrate layer (A), an intermediate layer (B), a peel layer (C) and a heat seal layer (D), wherein the peel layer (C) is formed from a resin composition having a specific Vicat softening temperature, and the heat seal layer (D) is formed from a resin composition having a specific glass transition temperature.

In other words, a first embodiment of the present invention offers a cover film comprising at least, in order, a substrate layer (A), an intermediate layer (B), a peel layer (C) and a heat seal layer (D), wherein
the peel layer (C) comprises a resin composition comprising a styrenic resin composition (a) having a styrene-diene block copolymer as a main component, and an ethylene-α-olefin random copolymer (b), the ethylene-α-olefin random copolymer occupying 20 to 50 mass% of the peel layer, and having a Vicat softening temperature of 55 to 80 °C; and
the heat seal layer (D) comprising an acrylic resin with a glass transition temperature of 55 to 80 °C.

In a further embodiment, the thickness of the substrate layer (A) after drying is preferably 12 to 20 µm, the thickness of the intermediate layer (B) after drying is preferably 10 to 40 µm, the thickness of the peel layer (C) after drying is preferably 5 to 20 µm, and the total thickness of the cover film after drying is preferably 45 to 65 µm.

Furthermore, an embodiment of a heat seal layer (D) of the present invention is characterized in that the heat seal layer (D) comprises 100 to 700 parts by mass of conductive microparticles of one of tin oxide, zinc oxide and zinc antimonate having a mass-average particle size of 1.0 µm or less, with respect to 100 parts by mass of the resin constituting the heat seal layer (D). Another embodiment of the heat seal layer (D) is characterized in that the heat seal layer (D) comprises 40 to 100 parts by mass of a cationic polymer-type anti-static agent having a quaternary ammonium salt on a side chain, with respect to 100 parts by mass of the resin constituting the heat seal layer (D).

The present invention offers a cover film to be used in combination with carrier tapes of polystyrene, polycarbonate and polyester, which can be thermally bonded to such carrier tapes in a manner such as to obtain sufficient peel strength even with a very short sealing time, thereby increasing the number of electronic components capable of being housed in the carrier tapes per unit time and reducing variations in peel strength when peeling the cover film so as to prevent components from flying out from the carrier tape when peeling the cover film.

### BRIEF DESCRIPTION OF THE DRAWINGS

[Fig. 1] A section view showing an example of a layer arrangement of the cover film of the present invention.
[Fig. 2] A section view showing an example of a layer arrangement of the cover film of the present invention.

### MODES FOR CARRYING OUT THE INVENTION

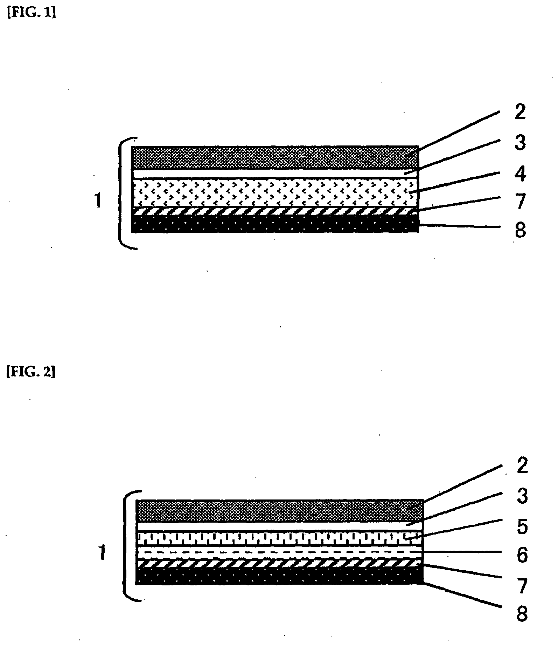

The cover film of the present invention comprises at least a substrate layer (A), an intermediate layer (B), a peel layer (C) and a heat seal layer (D). An example of an arrangement of the cover film of the present invention is shown in Fig. 1. Substrate layer (A) is a layer comprising a biaxially stretched polyester or a biaxially stretched nylon, of which biaxially stretched polyethylene terephthalate (PET) and polyethylene naphthalate (PEN), biaxially stretched 6,6-nylon and 6-nylon, and biaxially stretched polypropylene are particularly preferred. As the films for the substrate layer, it is possible to use those that are commonly used, as well as those to which an anti-static agent has been applied or kneaded in as an anti-static treatment, or those that have been subjected to a corona treatment or an easy-adhesion treatment. If the substrate layer (A) is too thin, the tensile strength of the cover film itself becomes low, making it susceptible to "film rupture" when peeling the cover film. On the other hand, if too thick, the heat-sealability of the carrier tape may decrease. Additionally, if the substrate layer is thick, the bending elasticity of the cover film itself becomes high, so that when peeling the cover film, the force of separation from the carrier tape acts at areas of low peel strength, causing the peel strength to become even lower, and increasing the variations in peel strength when peeling the cover film. Furthermore, in order to avoid increased costs, those of thickness 12 to 20 µm are preferably used.

In the present invention, an intermediate layer (B) is provided on one surface of the substrate layer (A) via an adhesive layer if needed. The resin constituting the intermediate layer (B) may be a low-density polyethylene (hereinafter referred to as LDPE), a linear low-density polyethylene (hereinafter referred to as LLDPE) or a linear low-density polyethylene polymerized with a metallocene catalyst (hereinafter referred to as m-LLDPE), m-LLDPEs being particularly preferred for their excellent tear strength. The intermediate layer (B) has the effect of alleviating disparities in head pressure when the sealing heads contact the cover film while heat-sealing the cover film to the carrier tape, enabling the substrate layer and the peel layer to be bonded evenly so as to prevent variations in peel strength when peeling the cover film. However, when m-LLDPEs are melt-extruded, it can sometimes be difficult to obtain a film of even thickness, so a LDPE can be added to the m-LLDPE to improve the film forming properties.

The above-mentioned m-LLDPE is a copolymer having, as comonomers, an ethylene and an olefin having at least 3 carbon atoms, preferably a linear, branched or aromatic nucleus-substituted α-olefin having 3 to 18 carbon atoms. Examples of linear mono-olefins include propylene, 1-butene, 1-pentene, 1-hexene, 1-octane, 1-nonene, 1-decene, 1-dodecene, 1-tetradecene, 1-hexadecene and 1-octadecene. Additionally, examples of branched mono-olefins include 3-methyl-1-butene, 3-methyl-1-pentene, 4-methyl-1-pentene and 2-ethyl-1-hexene. Additionally, styrenes and the like are examples of mono-olefins substituted with an aromatic nucleus. These comonomers can be copolymerized with ethylenes either singly or by combining two or more types. Those using 1-hexene or 1-octene as comonomers have good tensile strength and also excel in terms of cost, and are therefore preferably used.

The thickness of the intermediate layer (B) is preferably 10 to 40 µm. If the thickness of the intermediate layer (B) is less than 10 µm, there is a risk of the bonding strength between the substrate layer (A) and the intermediate layer (B) becoming insufficient, and the effect of reducing disparities in head pressure of the sealing heads when heat-sealing cover films to carrier tape is reduced, as a result of which variations in peel strength when peeling the cover film are increased. On the other hand, at more than 40 µm, the heat of the sealing heads is less easily transmitted to the heat seal boundary between the carrier tape and the cover film when ultra high-speed heat-sealing a cover film to a carrier tape, making it difficult to obtain sufficient peel strength with the heat seal. Additionally, the bend elasticity of the cover film itself becomes high, so during the peeling of the cover film, bending of the cover film at areas of low peel strength causes forces to act toward separation from the carrier tape, further reducing the peel strength.

Therefore, if the intermediate layer is too thick, variations are likely to occur in the peel strength when peeling the cover film. Furthermore, thickening the intermediate layer raises costs as well.

As described below, the intermediate layer (B) may be composed of two or more layers depending qn the method of production of the cover film of the present invention.

The cover film of the present invention is provided with a peel layer (C) between the intermediate layer (B) and the heat seal layer (D). It is important that the thermoplastic resin used in this peel layer comprise a styrenic resin composition (a) having a styrene-diene block copolymer as a main component, and an ethylene-α-olefin random copolymer (b) at a specific blending proportion, and that component (b) occupy 20 to 50 mass% of the peel layer (C). This peel layer (C) obtains a bonding force with the heat seal layer (D) by means of component (a), enables the bonding force to be adjusted to an appropriate value by containing the aforementioned amount of component (b), and achieves sufficient and stable peel strength between the peel layer (C) and the heat seal layer (D) when peeling the heat-sealed cover film from the carrier tape. If the amount of component (b) in the peel layer is less than 20 mass%, the adhesive force between the peel layer (C) and the heat seal layer (D) rises, increasing the variation in peel strength and changing the peel strength with the passage of time after heat sealing. On the other hand, if the amount of component (b) exceeds 50 mass%, the bonding strength between the peel layer (C) and the heat seal layer (D) becomes low, making it difficult to obtain sufficient peel strength.

Furthermore, this peel layer (C) contains a resin composition having a Vicat softening temperature of 55 to 80 °C, more preferably 60 to 75 °C, according to JIS K-7206 method A120. Specifically, this Vicat softening temperature was measured by setting a measurement sample flat beneath the tip of a needle-shaped penetrator of an unweighted load rod, five minutes later, placing weights on a weight dish so that the total force on the sample is 10 N, then raising the temperature of the heating device at a heating rate of 120 °C/hr, and recording the temperature at which the tip of the penetrator penetrates 1 mm into the sample from the position at the start of the test. By using a resin composition with a Vicat softening temperature of 55 °C to 80 °C for the peel layer (C), the peel layer (C) softens during heat-sealing so that the heat of the sealing heads is not easily transmitted to the boundary between the carrier tape and the cover film, and the cover film can be heat-sealed to the carrier tape in a very short sealing time. When the Vicat softening temperature of the peel layer is less than 55 °C, the peel layer can soften and become fluid when heat-sealing the cover film, as a result of which the peel layer may be squeezed from the end portion of the cover film, soiling the sealing heads and causing disparities in the peel strength, as well as changing the peel strength due to the passage of time after heat-sealing. On the other hand, when the Vicat softening temperature of the peel layer (C) exceeds 80 °C, sufficient peel strength cannot be obtained for ultra high-speed heat-sealing.

The thickness of the peel layer (C) is normally 3 to 25 µm, preferably 5 to 20 µm. When the thickness of the peel layer (C) is less than 3 µm, sufficient peel strength may not be obtained when heat-sealing the cover film to a carrier tape. On the other hand, when the thickness of the peel layer (C) exceeds 25 µm, sufficient peel strength cannot be obtained for ultra high-speed heat-sealing, there tend to be disparities in peel strength when peeling the cover film, and the costs tend to mount. As explained below, the peel layer (C) can normally be formed by thermally melting the resin composition to constitute the peel layer in an extruder, and extruding from an inflation die or T-die.

The cover film of the present invention has a heat seal layer (D) on the surface of a peel layer (C). The thermoplastic resin constituting the heat seal layer (D) is an acrylic resin having a glass transition temperature of 55 to 80 °C, more preferably 60 to 75 °C. Acrylic resins are materials that are generally used to constitute carrier tapes, having superior heat-sealing capability with respect to polystyrene, polycarbonate and polyester resins. The acrylic resins constituting the heat seal layer (D) are resins comprising at least 50 mass% of at least one type of acryl residue including acrylic acid esters such as methyl acrylate, ethyl acrylate, propyl acrylate and butyl acrylate, methacrylic acid esters such as methyl methacrylate, ethyl methacrylate, propyl methacrylate, butyl methacrylate and cyclohexyl methacrylate, and may be resins obtained by copolymerizing two or more types thereof. If the glass transition temperature of the acrylic resin constituting the heat seal layer (D) is less than 55 °C, the change in peel strength is large when let stand for a long time after heat-sealing to a carrier tape, so the peel strength lacks stability. On the other hand, if the glass transition temperature of the acrylic resin constituting the heat seal layer (D) exceeds 80 °C, sufficient peel strength cannot be obtained in the ultra high-speed heat-seal. The glass transition temperature is the value obtained when the heating speed is set to 10 °C per minute in the measurement method of JIS K7121. Specifically, the glass transition temperature was measured using a thermal analyzer by setting about 1.5 mg of alumina as a reference substance and about 1.5 mg of a measured sample in the holder portion, raising the temperature of the nitrogen atmosphere from room temperature to 150 °C at a temperature ramp rate of 10 °C per minute, and measuring the difference in heat between the reference substance and the measured sample. According to the present invention, a heat seal layer comprising an acrylic resin with a specific glass transition temperature is formed on the surface of a peel layer comprising a thermoplastic resin with a Vicat softening temperature of 55 to 80 °C comprising a styrene resin composition (a) and an ethylene-α-olefin random copolymer (b), thereby softening the peel layer (C) when heat-sealing so that the heat from the sealing heads can be easily transmitted to the heat seal layer, and enabling the heat seal layer to easily follow the contours of the carrier tape surface, thereby resulting in better ultra high-speed heat-sealing ability than various types of carrier tape materials such as polystyrene, polycarbonate and polyester resins which are materials constituting carrier tapes.

The thickness of the heat seal layer (D) is normally 0.1 to 2.0 µm, preferably 0.3 to 1.0 µm. When the thickness of the heat seal layer (D) is less than 0.1 µm, there may be insufficient anti-static properties or peel strength when the cover film is heat-sealed to carrier tape. On the other hand, if the thickness of the heat seal layer (D) exceeds 2.0 µm, there is a risk of variations occurring in the peel strength when peeling the cover film, inviting cost increases. As mentioned below, the heat seal layer (D) is usually formed by methods such as applying a solution in which the resin composition constituting the heat seal layer is dissolved in toluene or ethyl acetate, or applying an emulsion of the resin constituting the heat seal layer, but in the case of an application method, the thickness referred to here is the thickness after drying.

The heat seal layer (D) may comprise at least one conductive microparticle such as tin oxide, zinc oxide or zinc antimonate. Of these, tin oxide doped with antimony, phosphorus or gallium raises the conductivity with little loss of transparency, and is more preferably used. The conductive microparticles of tin oxide, zinc oxide or zinc antimonate may be spherical or acicular. The amount added should normally be 100 to 1000 parts by mass, preferably 100 to 700 parts by mass with respect to 100 parts by mass of the thermoplastic resin constituting the heat seal layer (D). When the amount of conductive particles added is less than 100 parts by mass, there is a risk that a heat seal layer (D) of the cover film having a surface resistance of less than 10¹² Ω cannot be obtained, and the cover film cannot be provided with sufficient anti-static properties. On the other hand, if 700 parts by mass is exceeded, the relative amount of thermoplastic resins is reduced, making it difficult to obtain sufficient peel strength due to the heat seal, and furthermore inviting reduced transparency of the cover film or cost increases.

The heat seal layer (D) may comprise 40 to 100 parts by mass of a cationic polymeric anti-static agent having a quaternary ammonium salt side chain with monomer-derived repeating units represented by the following general formula [Chem 1] with respect to 100 parts by mass of the resin constituting the heat seal layer (D). When less than 40 parts by mass of the polymeric anti-static agent are added, there is a risk that the surface resistance of the heat seal layer (D) of the cover film will be less than 10¹² Ω, in which case sufficient anti-static properties cannot be provided to the cover film. On the other hand, if more than 100 parts by mass, the variation in peel strength when peeling the cover film can become too large.

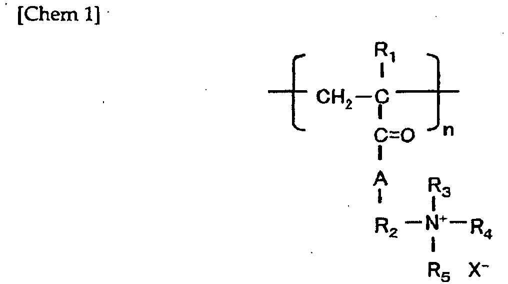

In the formula, A denotes an oxygen atom or an imino group, R₁ denotes a hydrogen atom or a methyl group, R₂ denotes an alkylene group having 1 to 4 carbon atoms, R₃, R₄ and R₅ respectively denote alkyl groups having 1 to 18 carbon atoms which may be the same or different, X- denotes an anion such as a chloride ion, a bromide ion, a sulfate ion or a methylsulfate ion, and n denotes an integer in the range of 100 to 5000.

The method of producing the cover film is not particularly limited, and any common method may be used. For example, the peel layer (C) may be pre-formed by a method such as T-die casting or inflation. Furthermore, an anchor coating agent of polyurethane, polyester, polyolefin or polyethyleneimine or the like may be applied to the surface of a substrate layer (A) such as a biaxially stretched polyester film, followed by sand lamination by extruding, from a T-die, a resin composition mainly composed of a m-LLDPE to form an intermediate layer (B) between the surface of application of the anchor coating agent and the peel layer (C), resulting in a three-layer film consisting of a substrate layer (A), an intermediate layer (B) and a peel layer (C). Furthermore, the desired cover film can be obtained by applying the resin composition constituting the heat seal layer (D) onto the surface of the peel layer (C), for example, with a gravure coater, a reverse coater, a kiss coater, an air knife coater, a Meyer bar coater or a dip coater.

As another method, a resin composition mainly composed of a m-LLDPE constituting the intermediate layer (B) and a resin composition constituting the peel layer (C) may be separately extruded from a uniaxial extruder, then laminated by a multimanifold die to form a two-layer film consisting of an intermediate layer (B) and a peel layer (C). Then, an anchor coating agent of polyurethane, polyester, polyolefin or the like is coated onto the surface, for example, of a biaxially stretched polyester film of the substrate layer (A), and the two-layer film is laminated by dry lamination onto the surface of application of the anchor coating agent, resulting in a three-layer film consisting of a substrate layer (A), an intermediate layer (B) and a peel layer (C). By further applying a resin composition constituting the heat seal layer (D) onto the surface of the peel layer (C) using, for example, a gravure coater, a reverse coater, a kiss coater, an air knife coater, a Meyer bar coater or a dip coater, a cover film can be obtained.

As yet another method, a resin composition mainly composed of a m-LLDPE constituting a portion of intermediate layer (B) and a resin composition constituting the peel layer (C) may be separately extruded from a uniaxial extruder, then laminated with a multimanifold die to form a two-layer film consisting of parts of the intermediate layer (B) and a peel layer (C). Then, an anchor coating agent of polyurethane, polyester, polyolefin, polyethyleneimine or the like is coated onto the surface, for example, of a biaxially stretched polyester film of the substrate layer (A), and the resin composition mainly composed of a m-LLDPE forming a portion of the intermediate layer (B) is extruded from a T-die between the coating surface of the anchor coating agent and the two-layer film by sand lamination, resulting in a three-layer film consisting of a substrate layer (A), an intermediate layer (B) and a peel layer (C). Furthermore, a resin composition constituting the heat seal layer (D) may be applied to the surface of the peel layer (C), for example, by a gravure coater, a reverse coater, a kiss coater, an air knife coater, a Meyer bar coater or a dip coater, to obtain a cover film. In this method, the intermediate layer (B) has a two-layered structure consisting of a layer formed by coextrusion with the peel layer (C) and a layer formed by sand lamination. The thickness of the layer formed by sand lamination is normally in the range of 10 to 20 µm.

In addition to the above processes, the surface of the substrate layer (A) of the cover film may be subjected to an anti-static treatment as needed. Anti-static agents such as, for example, anionic, cationic, non-ionic or betainic surfactant-type anti-static agents or polymeric anti-static agents and conductive agents such as polystyrene sulfonate and copolymers of acrylic acid esters and quaternary ammonium acrylate may be applied by roll coaters or lip coaters using gravure rollers, or by spraying. Additionally, in order to apply these anti-static agents evenly, the film surface should preferably be subjected to a corona discharge treatment or ozone treatment, preferably a corona discharge treatment, before performing the anti-static treatment.

Cover films are used as lid members for carrier tapes which are containers for housing electronic components. Carrier tapes are in the form of ribbons about 8 mm to 100 mm wide, having recesses for housing the electronic components. When heat-sealing a cover film as a lid member, the material constituting the carrier tape is not particularly limited, but the present invention can be suitably used for polystyrene, polyester or polycarbonate carrier tapes. The carrier tape may be made conductive by kneading carbon black or carbon nanotubes into the resin, or provided with anti-static properties by kneading in cationic, anionic or non-ionic surfactant-type anti-static agents or permanent anti-static agents such as polyether ester amides, or by applying to the surface a coating solution having a surfactant-type anti-static agent or a conductive material such as polypyrrole or polythiophene dispersed in an organic binder.

A packaging for housing electronic components may, for example, be obtained by placing electronic components or the like in the recesses for housing electronic components in the carrier tape, then packaging them by using sealing heads to continuously heat-seal both end portions of the cover film in the longitudinal direction using a cover film as the lid member, and winding the result onto a reel. By packaging them in this form, the electronic components or the like may be stored and transported. The package of the present invention can be used to house and transport various types of electronic components such as diodes, transistors, capacitors, resistors and LEDs, and it particularly enables ultra high-speed heat-sealing of electronic components with a thickness of 1 mm or less such as LEDs, transistors, diodes and resistors, thereby largely preventing the occurrence of trouble when mounting electronic components. The package housing the electronic components is conveyed using holes known as sprocket holes for conveying the carrier tape provided on the edge portions in the longitudinal direction of the carrier tape, while peeling the cover film a little at a time, checking for the presence, orientation and position of the electronic components and extracting them with a component mounting device, then mounting them to a substrate.

If the peel strength is too small when peeling off the cover film, the cover film may peel away from the carrier tape and the housed components may fall out, while if too high, the carrier tape may become difficult to peel and the cover film may be torn when peeling. For this reason, the peel strength of the cover tape with respect to the carrier tape, when subjected to ultra high-speed heat-sealing at a sealing head temperature of 160 to 210 °C, should be within the range of 0.20 to 0.70 N, preferably 0.35 to 0.60 N. For this reason, for ultra high-speed sealing at a sealing head temperature of 210 °C, a cover tape with a peel strength of at least 0.20 N and preferably at least 0.35 N may be favorably used. Furthermore, in order to prevent electronic components from flying out from the carrier tape when peeling the cover film, the variation in peel strength should preferably be 0.30 N or less, more preferably 0.20 N or less. Additionally, after housing the electronic components in the carrier tape and heat-sealing the cover film, it may be exposed to a high-temperature environment during transport or storage, so it is important for the peel strength to remain stable even in a high-temperature environment.

### EXAMPLES

Herebelow, examples of the present invention will be described in detail, but the present invention is not to be construed as being limited thereby. In the examples and comparative examples, the following raw materials were used for the substrate layer (A), the intermediate layer (B), the peel layer (C) and the heat seal layer (D).

### (Material of Substrate Layer (A))

(a-1) Biaxially stretched polyethylene terephthalate film (Toyo Boseki), 16 µm thick (Resin of Intermediate Layer (B))
(b-1) m-LLDPE 1: Harmorex NH745N (Japan Polyethylene)
(b-2) m-LLDPE 2: Evolue SP3010 (Prime Polymer)
(b-3) LDPE 3: Ube Polyethylene R500 (Ube Maruzen Polyethylene)

### (Resin of Peel Layer (C))

(c-a-1) Styrene-butadiene block copolymer 1: Clearen 1 (Denka; Vicat softening temperature 76 °C, styrene proportion 83 mass%)
(c-a-2) Styrene-butadiene block copolymer 2: TR-2000 (JSR; Vicat softening temperature 45 °C, styrene proportion 40 mass%)
(c-a-3) Styrene butadiene block copolymer 3: Clearen 2 (Denka; Vicat softening temperature 93 °C, styrene proportion 82 mass%)
(c-a-4) Styrene butadiene block copolymer 4: Clearen 3 (Denka; Vicat softening temperature 63 °C, styrene proportion 70 mass%)
(c-b-1) Ethylene-α-olefin random copolymer 1: Kernel KF270T (Japan Polyethylene; Vicat softening temperature 88 °C)
(c-b-2) Ethylene-α-olefin random copolymer 2: Kernel KF360T (Japan Polyethylene; Vicat softening temperature 72 °C)
(c-b-3) Ethylene-α-olefin random copolymer 3: Tafmer A (Mitsui Chemical; Vicat softening temperature 55 °C)
(c-b-4) Ethylene-α-olefin random copolymer 4: Kernel KS240T (Japan Polyethylene; Vicat softening temperature 44 °C)
(c-b-5) Ethylene-α-olefin random copolymer 5: Kernel KF283 (Japan Polyethylene; Vicat softening temperature 102 °C)
(c-c-1) High-impact polystyrene: Toyo Styrol E640N (Toyo Styrene; Vicat softening temperature 99 °C)

### (Resin of Heat Seal Layer (D))

(d-1) Acrylic resin 1: methyl methacrylate-butyl acrylate-cyclohexyl methacrylate random copolymer emulsion solution (Shin-Nakamura Chemical; glass transition temperature 60 °C)
(d-2) Acrylic resin 2: methyl methacrylate-butyl methacrylate random copolymer emulsion solution (Shin-Nakamura Chemical; glass transition temperature 78 °C)
(d-3) Acrylic resin 3: methyl methacrylate-butyl acrylate random copolymer emulsion solution (Shin-Nakamura Chemical; glass transition temperature 55 °C)
(d-4) Acrylic resin 4: styrene-butyl methacrylate random copolymer emulsion solution (Shin-Nakamura Chemical; glass transition temperature 70 °C)
(d-5) Acrylic resin 5: methyl methacrylate-butyl methacrylate random copolymer emulsion solution (Shin-Nakamura Chemical; glass transition temperature 85 °C)
(d-6) Acrylic resin 6: methyl methacrylate-butyl acrylate random copolymer emulsion solution (Shin-Nakamura Chemical; glass transition temperature 45 °C)
(d-7) Conductive filler solution: SN-100D (or SNS-10D; Ishihara Sangyo, antimony-doped tin oxide, mass-average particle size 0.1 µm)
(d-8) Polymeric anti-static agent solution: Bondeip PM (Altech; cationic polymer anti-static agent comprising quaternary ammonium acrylate salts)

### (Example 1)

52.5 parts by mass of (c-a-1) styrene-butadiene block copolymer 1 "Clearen 1" (Denka), 12.5 parts by mass of (c-a-2) styrene butadiene block copolymer 2 "TR-2000" (JSR) and 35 parts by mass of (c-b-1) ethylene-α-olefin random copolymer 1 "Kernel KF270" (Japan Polyethylene) were pre-blended using a tumbler, kneaded and extruded at 210 °C using a 40 mm uniaxial extruder to form a peel layer resin composition, then this peel layer resin composition was formed into a film using an inflation extruder to result in a 15 µm-thick film constituting a peel layer.

On the other hand, a two-agent cured polyurethane anchor coating agent was applied using a roll coater to a biaxially stretched polyethylene terephthalate film (16 µm thick) for constituting the substrate layer, and between the coating surface and the film constituting the above-described peel layer, a melted (b-1) m-LLDPE 1 "Harmorex NH745N" (Japan Polyethylene) for constituting the intermediate layer was extruded to a thickness of 25 µm, to obtain a laminated film by extrusion lamination.

After subjecting the peel layer surface of this laminated film to a corona treatment, a solution mixing the (d-1) acrylic resin 1 "methyl methacrylate-butyl acrylate-cyclohexyl methacrylate random copolymer emulsion solution" (Shin-Nakamura Chemical) and (d-7) conductive filler solution "SN-100D" (Ishihara Sangyo) with a resin and conductive filler mass ratio of 100 : 400 prepared beforehand for the heat seal layer was applied to a post-drying thickness of 0.5 µm using a gravure coater, to obtain a cover film having a substrate layer/intermediate layer/peel layer/heat seal layer laminated structure. The properties of the cover film are shown in Table 1.

### (Examples 2-14, Examples 17-23, Comparative Examples 1-9)

Aside from using the resin compositions and thicknesses shown in the below Tables 1 to 3, cover films were produced using the same methods as Example 1.

### (Example 15)

52.5 parts by mass of (c-a-1) styrene-butadiene block copolymer 1 "Clearen 1" (Denka), 12.5 parts by mass of (c-a-2) styrene butadiene block copolymer 2 "TR-2000" (JSR) and 35 parts by mass of (c-b-1) ethylene-α-olefin random copolymer 2 "Kernel KF360T" (Japan Polyethylene) were pre-blended using a tumbler, kneaded and extruded at 210 °C using a 40 mm uniaxial extruder to form a peel layer resin composition at a line speed of 20 m per minute. This peel layer resin composition and a mixture of 50 parts by mass of (b-2) m-LLDPE 2 "Evolue SP3010" (Prime Polymer) and 50 parts by mass of (b-3) LDPE 3 "Ube Polyethylene R500" (Ube Maruzen Polyethylene) for the first intermediate layer were extruded from separate uniaxial extruders, then extruded in layers from a multimanifold T-die to obtain a two-layer film having a peel layer and first intermediate layer with thicknesses of respectively 7 µm and 25 µm.

On the other hand, a two-agent cured polyurethane anchor coating agent was applied using a roll coater to a biaxially stretched polyethylene terephthalate film (16 µm thick) for constituting the substrate layer, and between the coating surface and the surface on the first intermediate layer side of the above-described two-layer film, a melted (b-1) m-LLDPE 1 "Harmorex NH745N" (Japan Polyethylene) for constituting the second intermediate layer was extruded to a thickness of 13 µm, to obtain a laminated film by extrusion lamination.

After subjecting the peel layer surface of this laminated film to a corona treatment, a solution mixing the (d-1) acrylic resin 1 "methyl methacrylate-butyl acrylate-cyclohexyl methacrylate random copolymer emulsion solution" (Shin-Nakamura Chemical) and (d-7) conductive filler solution "SN-100D" (Ishihara Sangyo) with a resin and conductive filler mass ratio of 100: 400 prepared beforehand for the heat seal layer was applied to a post-drying thickness of 0.5 µm using a gravure coater, to obtain a cover film having a substrate layer/intermediate layer/peel layer/heat seal layer laminated structure. The properties of the cover film are shown in Table 2.

### (Example 16)

Aside from using the resin compositions and thicknesses shown in the below Table 2, cover films were produced using the same methods as Example 15.

### (Comparative Example 10)

52.5 parts by mass of (c-a-1) styrene-butadiene block copolymer 1 "Clearen 1" (Denka), 12.5 parts by mass of (c-a-2) styrene butadiene block copolymer 2 "TR-2000" (JSR) and 35 parts by mass of (c-b-1) ethylene-α-olefin random copolymer 1 "Kernel KF270T" (Japan Polyethylene) were pre-blended using a tumbler, kneaded and extruded at 210 °C using a 40 mm uniaxial extruder to form a peel layer resin composition, then this peel layer resin composition was formed into a film using an inflation extruder to result in a 15 µm-thick film constituting a peel layer.

On the other hand, a two-agent cured polyurethane anchor coating agent was applied using a roll coater to a biaxially stretched polyethylene terephthalate film (16 µm thick) for constituting the substrate layer, and between the coating surface and the film constituting the above-described peel layer, a melted (b-1) m-LLDPE 1 "Harmorex NH745N" (Japan Polyethylene) for constituting the intermediate layer was extruded to a thickness of 25 µm, to obtain a laminated film consisting of a substrate layer/intermediate layer/peel layer by extrusion lamination. The properties of this cover film are shown in Table 3.

### <Evaluation Method>

### (1) High-speed sealability of PS carrier tape

Using a heat sealer (Nitto Kogyo LTM-100), a 5.5 mm wide cover film was heat-sealed to an 8 mm wide polystyrene conductive carrier tape (Denka EC-R) using two sealing heads of width 0.5 mm, sealing head length 30 mm, heat sealing temperature 210 °C, sealing pressure 3.5 kgf, feed length 4 mm, and sealing time 0.008 seconds × 7.5 seals. The measurement of peel strength was made after letting stand for 24 hours in an atmosphere of temperature 23 °C and relative humidity 50%, and peeling 100 mm of the cover film at a peel angle of 170° to 180° at a speed of 300 mm per minute in the same atmosphere of temperature 23 °C and relative humidity 50%. After heat sealing, the cover film did not become peeled, and a peel strength of at least 0.3 N was necessary to stably house the components.

### (2) Peel strength variation of heat-sealed products with respect to polystyrene carrier-tape

Using a heat sealer (Nitto Kogyo LTM-100), a 5.5 mm wide cover film was heat-sealed to an 8 mm wide polystyrene conductive carrier tape (Denka EC-R) using two sealing heads of width 0.5 mm, sealing head length 30 mm, heat sealing temperature 210 °C, sealing pressure 3.5 kgf, feed length 4 mm, and sealing time 0.008 seconds x 7.5 seals, while adjusting the heat sealing temperature so as to obtain an average peel strength of 0.40 N. After letting stand for 24 hours in an atmosphere of temperature 23 °C and relative humidity 50%, the peeling strength variation (difference between the maximum value and the minimum value) was measured when peeling 100 mm of the cover film at a peel angle of 170° to 180° at a speed of 300 mm per minute in the same atmosphere of temperature 23 °C and relative humidity 50%. Those having a peel strength of less than 0.40 N even with a heat seal temperature of 235 °C were left unevaluated. When peeling the cover film, the peel strength variation must be held to 0.3 N or less in order to prevent components from flying out due to the disparities in peel strength.

### (3) Change over time of peel strength of heat-sealed product with respect to polystyrene carrier tape

Under the same conditions as in paragraph (1) above, the heat seal temperature was adjusted to heat-seal a polystyrene carrier tape (Denka EC-R) with an average peel strength of 0.40 N. After letting the heat-sealed product stand for 7 days in a 60 °C environment, the peel strength was measured under the same conditions as the above paragraph (1). Those having a peel strength of less than 0.40 N even with a heat seal temperature of 235 °C were left unevaluated. Since the variation in peel strength can be expected to increase if the peel strength becomes too large after changes over time, the increase over the value of paragraph (1) must be within 0.3 N.

### (4) High-speed sealability of polycarbonate carrier tape

Using a heat sealer (Nitto Kogyo LTM-100), a 5.5 mm wide cover film was heat-sealed to an 8 mm wide polycarbonate conductive carrier tape (3M No. 3000) using two sealing heads of width 0.5 mm, sealing head length 30 mm, heat sealing temperature 210 °C, sealing pressure 3.5 kgf, feed length 4 mm, and sealing time 0.008 seconds × 7.5 seals. The measurement of peel strength was made after letting stand for 24 hours in an atmosphere of temperature 23 °C and relative humidity 50%, and peeling 100 mm of the cover film at a peel angle of 170° to 180° at a speed of 300 mm per minute in the same atmosphere of temperature 23 °C and relative humidity 50%. After heat sealing, the cover film did not become peeled, and a peel strength of at least 0.3 N was necessary to stably house components.

### (5) Surface resistance

In accordance with the method of JIS K6911, Mitsubishi Chemical Hiresta UPMCP-HT 450 was used to measure the surface resistance of the surface of the heat seal layer of the cover film at an applied voltage of 100 V in an atmosphere of temperature 23 °C and relative humidity 50%, using a 70 mm surface electrode with a positive electrode diameter of 50 mm and a negative electrode diameter of 70 mm. A surface resistance of 10¹² Ω or less was required to provide the cover film with a sufficient anti-static property.

**[Table 1]**

| | Type of Resin | | | | Ex 1 | Ex 2 | Ex 3 | Ex 4 | Ex 5 | Ex 6 | Ex 7 | Ex 8 | Ex 9 | Ex 10 | Ex 11 | Ex 12 |
|---|---|---|---|---|---|---|---|---|---|---|---|---|---|---|---|---|
| Substrate Layer | Substrate layer thickness (µm) | | | | 16 | 16 | 16 | 16 | 16 | 16 | 16 | 16 | 16 | 16 | 16 | 16 |
| Intermediate Layer | Intermediate layer thickness (µm) | | | | 25 | 25 | 25 | 25 | 25 | 25 | 25 | 25 | 25 | 25 | 25 | 25 |
| Peel Layer | | | Vicat softening temperature (°C) | Styrene ratio (mass%) | | | | | | | | | | | | |
| | St-Bd block copolymer resin 1 | c-a-1 | 76 | 83 | 52.5 | 52.5 | 52.5 | 52.5 | 42.5 | 32.5 | | | | 60 | 49 | 38 |
| | St-Bd block copolymer resin 2 | c-a-2 | 45 | 40 | 12.5 | 12.5 | 12.5 | 12.5 | 12.5 | 12.5 | 12.5 | 12.5 | 12.5 | 20 | 16 | 12 |
| | St-Bd block copolymer resin 3 | c-a-3 | 93 | 82 | | | | | | | 525 | 52.5 | | | | |
| | St-Bd block copolymer resin 4 | c-a-4 | 63 | 70 | | | | | | | | | 52.5 | | | |
| | Ethylene-α-olefin 1 | c-b-1 | 88 | - | 35 | | | | | | | | | 22 | 35 | 50 |
| | Ethylene-α-olefin 2 | c-b-2 | 72 | - | | 35 | | | 35 | 35 | | | | | | |
| | Ethylene-α-olefin 3 | c-b-3 | 54 | - | | | 35 | | | | 35 | | 35 | | | |
| | Ethylene-α-olefin 4 | c-b-4 | 44 | - | | | | 35 | | | | 35 | | | | |
| | Ethylene-α-olefin 5 | c-b-5 | 102 | - | | | | | | | | | | | | |
| | High-impact polystyrene | c-c-1 | 99 | 95 | | | | | 10 | 20 | | | | | | |
| | Vicat softening temperature (°C) of peel layer | | | | 76 | 71 | 64 | 61 | 73 | 75 | 73 | 70 | 58 | 74 | 75 | 78 |
| | Peel layer thickness (µm) | | | | 15 | 15 | 15 | 15 | 15 | 15 | 15 | 15 | 15 | 15 | 15 | 15 |
| Heat Seal Layer | | | Glass transition temperature (°C) | | | | | | | | | | | | | |
| | Acrylic resin 1 | d-1 | 60 | | 100 | 100 | 100 | 100 | 100 | 100 | 100 | 100 | 100 | 100 | 100 | 100 |
| | Acrylic resin 2 | d-2 | 78 | | | | | | | | | | | | | |
| | Acrylic resin 3 | d-3 | 55 | | | | | | | | | | | | | |
| | Acrylic resin 4 | d-4 | 70 | | | | | | | | | | | | | |
| | Acrylic resin 5 | d-5 | 85 | | | | | | | | | | | | | |
| | Acrylic resin 6 | d-6 | 45 | | | | | | | | | | | | | |
| | Conductive filler solution | d-7 | - | | 400 | 400 | 400 | 400 | 400 | 400 | 400 | 400 | 400 | 400 | 400 | 400 |
| | Polymeric anti-static agent solution | d-8 | - | | | | | | | | | | | | | |
| | Heat seal layer thickness (µm) | | | | 0.5 | 0.5 | 0.5 | 0.5 | 0.5 | 0.5 | 0.5 | 0.5 | 0.5 | 0.5 | 0.5 | 0.5 |
| Total thickness of cover film (µm) | | | | | 56.5 | 56.5 | 56.5 | 56.5 | 56.5 | 56.5 | 56.5 | 56.5 | 56.5 | 56.5 | 56.5 | 56.5 |
| (1) High-speed sealability to polystyrene carrier tape | | | | units: N | 0.54 | 0.56 | 0.54 | 0.51 | 0.45 | 0.41 | 0.47 | 0.49 | 0.67 | 0.55 | 0.48 | 0.37 |
| (2) Peel strength variation for polystyrene carrier tape | | | | units: N | 0.08 | 0.11 | 0.14 | 0.16 | 0.09 | 0.11 | 0.09 | 0.13 | 0.23 | 0.28 | 0.17 | 0.12 |
| (3) Change over time in peel strength of polystyrene carrier tape heat-sealed product | | | | units: N | 0.49 | 0.55 | 0.58 | 0.59 | 0.54 | 0.55 | 0.54 | 0.57 | 0.61 | 0.64 | 0.55 | 0.50 |
| (4) High-speed sealability to polycarbonate carrier tape | | | | units: N | 0.51 | 0.51 | 0.57 | 0.49 | 0.41 | 0.44 | 0.51 | 0.54 | 0.72 | 0.51 | 0.50 | 0.41 |
| (5) Surface resistance | | | | units: Ω | 10⁹ | 10⁹ | 10⁹ | 10⁹ | 10⁹ | 10⁹ | 10⁹ | 10⁹ | 10⁹ | 10⁹ | 10⁹ | 10⁹ |

**[Table 2]**

| | Type of Resin | | | | Ex 13 | Ex 14 | Ex 15 | Ex 16 | Ex 17 | Ex 18 | Ex 19 | Ex 20 | Ex 21 | Ex 22 | Ex 23 |
|---|---|---|---|---|---|---|---|---|---|---|---|---|---|---|---|
| Substrate Layer | Substrate layer thickness (µm) | | | | 16 | 16 | 16 | 16 | 16 | 16 | 16 | 16 | 16 | 16 | 16 |
| Intermediate Layer | Intermediate layer thickness (µm) | | | | 25 | 25 | 38 | 45 | 25 | 25 | 25 | 25 | 25 | 25 | 25 |
| Peel Layer | | | Vicat softening temperature (°C) | Styrene ratio (mass%) | | | | | | | | | | | |
| | St-Bd block copolymer resin 1 | c-a-1 | 76 | 83 | 40 | | 52.5 | 52.5 | 52.5 | 52.5 | 52.5 | 52.5 | 52.5 | 52.5 | 52.5 |
| | St-Bd block copolymer resin 2 | c-a-2 | 45 | 40 | 25 | 25 | 12.5 | 12.5 | 12.5 | 12.5 | 12.5 | 12.5 | 12.5 | 12.5 | 12.5 |
| | St-Bd block copolymer resin 3 | c-a-3 | 93 | 82 | | 40 | | | | | | | | | |
| | St-Bd block copolymer resin 4 | c-a-4 | 63 | 70 | | | | | | | | | | | |
| | Ethylene-α-olefin 1 | c-b-1 | 88 | - | 35 | 35 | | | | | | | | | |
| | Ethylene-α-olefin 2 | c-b-2 | 72 | - | | | 35 | 35 | 35 | 35 | 35 | 35 | 35 | 35 | 35 |
| | Ethylene-α-olefin 3 | c-b-3 | 54 | - | | | | | | | | | | | |
| | Ethylene-α-olefin 4 | c-b-4 | 44 | - | | | | | | | | | | | |
| | Ethylene-α-olefin 5 | c-b-5 | 102 | - | | | | | | | | | | | |
| | High-impact polystyrene | c-c-1 | 99 | 95 | | | | | | | | | | | |
| | Vicat softening temperature (°C) of peel layer | | | | 72 | 79 | 71 | 71 | 71 | 71 | 71 | 71 | 71 | 71 | 71 |
| | Peel layer thickness (µm) | | | | 15 | 15 | 7 | 15 | 25 | 15 | 15 | 15 | 15 | 15 | 15 |
| Heat Seal Layer | | | Glass transition temperature (°C) | | | | | | | | | | | | |
| | Acrylic resin 1 | d-1 | 60 | | 100 | 100 | 100 | 100 | 100 | | | | | | |
| | Acrylic resin 2 | d-2 | 78 | | | | | | | 100 | | | 100 | 100 | 100 |
| | Acrylic resin 3 | d-3 | 55 | | | | | | | | 100 | | | | |
| | Acrylic resin 4 | d-4 | 70 | | | | | | | | | 100 | | | |
| | Acrylic resin 5 | d-5 | 85 | | | | | | | | | | | | |
| | Acrylic resin 6 | d-6 | 45 | | | | | | | | | | | | |
| | Conductive filler solution | d-7 | - | | 400 | 400 | 400 | 400 | 400 | 400 | 400 | 400 | | | |
| | Polymeric anti-static agent solution | d-8 | - | | | | | | | | | | 70 | 35 | 110 |
| | Heat seal layer thickness (µm) | | | | 0.5 | 0.5 | 0.5 | 0.5 | 0.5 | 0.5 | 0.5 | 0.5 | 0.5 | 0.5 | 0.5 |
| Total thickness of cover film (µm) | | | | | 56.5 | 56.5 | 61.5 | 76.5 | 66.5 | 56.5 | 56.5 | 56.5 | 56.5 | 56.5 | 56.5 |
| (1) High-speed sealability to polystyrene carrier tape | | | | units: N | 0.48 | 0.36 | 0.48 | 0.37 | 0.41 | 0.39 | 0.65 | 0.52 | 0.41 | 0.44 | 0.37 |
| (2) Peel strength variation for polystyrene carrier tape | | | | units: N | 0.13 | 0.15 | 0.14 | 0.29 | 0.26 | 0.16 | 0.12 | 0.14 | 0.23 | 0.14 | 0.30 |
| (3) Change over time in peel strength of polystyrene carrier tape heat-sealed product | | | | units: N | 0.59 | 0.55 | 0.64 | 0.65 | 0.64 | 0.60 | 0.66 | 0.64 | 0.58 | 0.61 | 0.61 |
| (4) High-speed sealability to polycarbonate carrier tape | | | | units: N | 0.49 | 0.38 | 0.50 | 0.41 | 0.43 | 0.40 | 0.67 | 0.51 | 0.40 | 0.45 | 0.43 |
| (5) Surface resistance | | | | units: Ω | 10⁹ | 10⁹ | 10⁹ | 10⁹ | 10⁹ | 10⁹ | 10⁹ | 10⁹ | 10ⁱ⁰ | 10¹³ | 10⁹ |

**[Table 3]**

| | Type of Resin | | | | Co Ex 1 | Co Ex 2 | Co Ex 3 | Co Ex 4 | Co Ex 5 | Co Ex 6 | Co Ex 7 | Co Ex 8 | Co Ex 9 | Co Ex 10 |
|---|---|---|---|---|---|---|---|---|---|---|---|---|---|---|
| Substrate Layer | Substrate layer thickness (µm) | | | | 16 | 16 | 16 | 16 | 16 | 16 | 16 | 16 | 16 | 16 |
| Intermediate Layer | Intermediate layer thickness (µm) | | | | 25 | 25 | 25 | 25 | 25 | 25 | 25 | 25 | 25 | 25 |
| Peel Layer | | | Vicat softening temperature (°C) | Styrene ratio (mass%) | | | | | | | | | | |
| | St-Bd block copolymer resin 1 | c-a-1 | 76 | 83 | 52.5 | | | | 65 | 36 | 52.5 | 52.5 | | 52.5 |
| | St-Bd block copolymer resin 2 | c-a-2 | 45 | 40 | 12.5 | 12.5 | 12.5 | 12.5 | 20 | 9 | 12.5 | 12.5 | | 12.5 |
| | St-Bd block copolymer resin 3 | c-a-3 | 93 | 82 | | 52.5 | 52.5 | | | | | | | |
| | St-Bd block copolymer resin 4 | c-a-4 | 63 | 70 | | | | 52.5 | | | | | | |
| | Ethylene-α-olefin 1 | c-b-1 | 88 | - | | 35 | | | 15 | 55 | | | | |
| | Ethylene-α-olefin 2 | c-b-2 | 72 | - | | | | | | | 35 | 35 | 100 | 35 |
| | Ethylene-α-olefin 3 | c-b-3 | 54 | - | | | | | | | | | | |
| | Ethylene-α-olefin 4 | c-b-4 | 44 | - | | | | 35 | | | | | | |
| | Ethylene-α-olefin 5 | c-b-5 | 102 | - | 35 | | 35 | | | | | | | |
| | High-impact polystyrene | c-c-1 | 99 | 95 | | | | | | | | | | |
| | Vicat softening temperature (°C) of peel layer | | | | 81 | 85 | 90 | 49 | 72 | 80 | 71 | 71 | 72 | 71 |
| | Peel layer thickness (µm) | | | | 15 | 15 | 15 | 15 | 15 | 15 | 15 | 15 | 15 | 15 |
| Heat Seal Layer | | | Glass transition temperature (°C) | | | | | | | | | | | |
| | Acrylic resin 1 | d-1 | 60 | | 100 | 100 | 100 | 100 | 100 | 100 | | | | |
| | Acrylic resin 2 | d-2 | 78 | | | | | | | | | | | |
| | Acrylic resin 3 | d-3 | 55 | | | | | | | | | | | |
| | Acrylic resin 4 | d-4 | 70 | | | | | | | | | | | |
| | Acrylic resin 5 | d-5 | 85 | | | | | | | | 100 | | 100 | |
| | Acrylic resin 6 | d-6 | 45 | | | | | | | | | 100 | | |
| | Conductive filler solution | d-7 | - | | 400 | 400 | 400 | 400 | 400 | 400 | 400 | 400 | 400 | |
| | Polymeric anti-static agent solution | d-8 | - | | | | | | | | | | | |
| | Heat seal layer thickness (µm) | | | | 0.5 | 0.5 | 0.5 | 0.5 | 0.5 | 0.5 | 0.5 | 0.5 | 0.5 | - |
| Total thickness of cover film (µm) | | | | | 56.5 | 56.5 | 56.5 | 56.5 | 56.5 | 56.5 | 56.5 | 56.5 | 56.5 | 56.0 |
| (1) High-speed sealability to polystyrene carrier tape | | | | units: N | 0.26 | 0.27 | 0.21 | 0.62 | 0.56 | 0.17 | 0.31 | 0.67 | 0.04 | 0.45 |
| (2) Peel strength variation for polystyrene carrier tape | | | | units: N | 0.14 | 0.15 | 0.19 | 0.41 | 0.44 | n/a | 0.19 | 0.15 | n/a | 0.17 |
| (3) Change over time in peel strength of polystyrene carrier tape heat-sealed product | | | | units: N | 0.54 | 0.56 | 0.54 | 0.94 | 0.78 | n/a | 0.55 | 0.57 | n/a | 0.54 |
| (4) High-speed sealability to polycarbonate carrier tape | | | | units: N | 0.31 | 0.27 | 0.22 | 0.67 | 0.59 | 0.20 | 0.29 | 0.69 | 0.03 | 0.10 |
| (5) Surface resistance | | | | units: Ω | 10⁹ | 10⁹ | 10⁹ | 10⁹ | 10⁹ | 10⁹ | 10⁹ | 10⁹ | 10⁹ | >10¹³ |

### INDUSTRIAL APPLICABILITY

The cover film of the present invention can be used not only for storage and transport of various types of electronic components such as diodes, transistors, capacitors, resistors and LEDs wherein high-speed sealing is performed, but with regard to packaging by carrier tape for housing ICs and LSIs that are susceptible to the influence of static electricity, with the potential for higher utility as the trend toward ultra-high sealing progresses.

### DESCRIPTION OF THE REFERENCE NUMBERS

- 1: cover film
- 2: substrate layer
- 3: anchor coating agent
- 4: intermediate layer
- 5: first intermediate layer
- 6: second intermediate layer
- 7: peel layer
- 8: heat seal layer

## Claims

1. A cover film comprising at least, in order, a substrate layer (A), an intermediate layer (B), a peel layer (C) and a heat seal layer (D), wherein
the peel layer (C) comprises a resin composition having a Vicat softening temperature of 55 to 80 °C according to JIS K-7206 method A120 and comprising a styrenic resin composition (a) having a styrene-diene block copolymer as a main component, and an ethylene-α-olefin random copolymer (b),
the ethylene-α-olefin random copolymer (b) occupying 20 to 50 mass% of the peel layer (C), and
the heat seal layer (D) comprising an acrylic resin with a glass transition temperature of 55 to 80 °C according to JIS K7121 wherein the heating speed is set to 10°C per minute.

2. The cover film according to claim 1, wherein the thickness of the substrate layer (A) after drying is 12 to 20 µm, the thickness of the intermediate layer (B) after drying is 10 to 40 µm, the thickness of the peel layer (C) after drying is 5 to 20 µm, and the total thickness of the cover film after drying is 45 to 65 µm.

3. The cover film according to either one of claims 1 and 2, wherein the heat seal layer (D) comprises 100 to 700 parts by mass of conductive microparticles of one of tin oxide, zinc oxide and zinc antimonate having a mass-average particle size of 1.0 µm or less, with respect to 100 parts by mass of the resin constituting the heat seal layer (D).

4. The cover film according to any one of claims 1 to 3, wherein the heat seal layer (D) comprises 40 to 100 parts by mass of a cationic polymer-type anti-static agent having a quaternary ammonium salt on a side chain, with respect to 100 parts by mass of the resin constituting the heat seal layer (D).

## Patentansprüche

1. Ein Abdeckfilm umfassend zumindest, der Reihe nach, eine Substratschicht (A), eine Zwischenschicht (B), eine Abziehschicht (C) und eine Wärmeabdichtschicht (D), wobei
die Abziehschicht (C) eine Harzzusammensetzung umfasst, die eine Vicat-Erweichungstemperatur von 55 bis 80 °C gemäß JIS K-7206, Verfahren A120, aufweist und die eine Styrolharzzusammensetzung (a) mit einem Styrol-Dien-Blockcopolymeren als eine Hauptkomponente und ein statistisches Ethylen-α-Olefin-Copolymer (b) enthält,
wobei das statistisches Ethylen-α-Olefin-Copolymer (b) 20 bis 50 Gewichts-% der Abziehschicht (C) einnimmt, und
die Wärmeabdichtschicht (D) ein Acrylharz mit einer Glasübergangstemperatur von 55 bis 80 °C gemäß JIS K7121 enthält, wobei die Heizgeschwindigkeit auf 10 °C pro Minute eingestellt wird.

2. Der Abdeckfilm gemäß Anspruch 1, wobei die Dicke der Substratschicht (A) nach dem Trocknen 12 to 20 µm ist, die Dicke der Zwischenschicht (B) nach dem Trocknen 10 bis 40 µm ist, die Dicke der Abziehschicht (C) nach dem Trocknen 5 to 20 µm ist und die Gesamtdicke des Abdeckfilms nach dem Trocknen 45 to 65 µm ist.

3. Der Abdeckfilm gemäß einem der Ansprüche 1 und 2, wobei die Wärmeabdichtschicht (D) 100 bis 700 Gewichtsteile leitfähige Mikropartikel von einem ausgewählt aus Zinnoxid, Zinkoxid und Zinkantimonat mit einer gewichtsgemittelten Partikelgröße von 1,0 µm oder weniger enthält bezogen auf 100 Gewichtsteile des Harzes, das die Wärmeabdichtschicht (D) konstituiert.

4. Der Abdeckfilm gemäß einem der Ansprüche 1 bis 3, wobei die Wärmeabdichtschicht (D) 40 bis 100 Gewichtsteile eines kationischen polymeren antistatischen Mittels enthält, das ein quartäres Ammoniumsalz in einer Seitenkette aufweist bezogen auf 100 Gewichtsteile des Harzes, das die Wärmeabdichtschicht (D) konstituiert.

## Revendications

1. Film de revêtement comprenant au moins, dans l'ordre, une couche de substrat (A), une couche intermédiaire (B), une couche pelable (C) et une couche thermoscellable (D), dans lequel
la couche pelable (C) comprend une composition de résine présentant un point de ramollissement Vicat de 55 à 80°C conformément à la méthode A120 de la norme JIS K-7206 et comprenant une composition de résine styrénique (a) comportant un copolymère séquencé de styrène-diène à titre de composant principal, et un copolymère statistique d'éthylène-α-oléfine (b),
le copolymère statistique d'éthylène-α-oléfine (b) occupant 20 à 50 % en masse de la couche pelable (C), et
la couche thermoscellable (D) comprend une résine acrylique présentant une température de transition vitreuse de 55 à 80°C conformément à la norme JIS K7121,
et dans lequel la vitesse de chauffage est réglée à 10°C par minute.

2. Film de revêtement selon la revendication 1, dans lequel l'épaisseur de la couche de substrat (A) après séchage est de 12 à 20 µm, l'épaisseur de la couche intermédiaire (B) après séchage est de 10 à 40 µm, l'épaisseur de la couche pelable (C) après séchage est de 5 à 20 µM, et l'épaisseur totale du film de revêtement après séchage est de 45 à 65 µm.

3. Film de revêtement selon l'une ou l'autre des revendications 1 et 2, dans lequel la couche thermoscellable (D) comprend 100 à 700 parties en masse de microparticules conductrices en l'un parmi l'oxyde d'étain, l'oxyde de zinc et l'antimonate de zinc présentant une granulométrie moyenne en masse de 1,0 µm ou moins, pour 100 parties en masse de la résine constituant la couche thermoscellable (D).

4. Film de revêtement selon l'une quelconque des revendications 1 à 3, dans lequel la couche thermoscellable (D) comprend 40 à 100 parties en masse d'un agent antistatique de type polymère cationique comportant un sel d'ammonium quaternaire sur une chaîne latérale, pour 100 parties en masse de la résine constituant la couche thermoscellable (D).
